# EUROPÄISCHE PATENTSCHRIFT

(11) **EP 0 415 380 B1**
(45) Veröffentlichungstag und Bekanntmachung des Hinweises auf die Patenterteilung: **24.05.1995**
(21) Anmeldenummer: 90116533.2
(22) Anmeldetag: 29.08.1990
(51) Int. Cl.: A01D 43/10, A01D 82/00

(54) **Verfahren und Vorrichtung zum Aufbereiten von faserhaltigen Pflanzenkörpern**
Method and device for preparing fibrous plant bodies
Procédé et dispositif pour la préparation des corps de plantes contenant des fibres

(30) Priorität: 30.08.1989 DE 3928717; 21.12.1989 DE 3942404
(43) Veröffentlichungstag der Anmeldung: 06.03.1991
(73) Patentinhaber: Schuster, Siegfried, D-86971 Peiting (DE)
(72) Erfinder: Schuster, Siegfried, D-86971 Peiting (DE)
(74) Vertreter: Seidel, Herta, Dipl.-Phys.

(56) Entgegenhaltungen:
- EP-A- 0 205 206
- AT-B- 389 418
- DD-A- 229 576
- DE-A- 2 643 081
- DE-A- 3 320 717
- DE-A- 3 415 753
- DE-C- 2 917 191
- GB-A- 2 183 134
- US-A- 4 524 575

## Beschreibung

Die Erfindung betrifft ein Verfahren zum Aufbereiten von faserhaltigen Pflanzen (Gras,Flachs, Sisal und dergleichen), bei dem die Pflanzen auf dem Feld von ihren Wurzelballen abgetrennt, von einer Fördervorrichtung aufgenommen, weitergeleitet, aufgeschlossen und anschließend auf dem Feld abgelegt werden. Ferner betrifft die Erfindung eine Vorrichtung zur Durchführung des genannten Verfahrens mit einer drehbaren Fördereinrichtung zum Aufnehmen des von seinen Wurzelballen abgetrennten Pflanzengutes und einer Vorrichtung zum Aufschließen der Pflanzen.

Es ist bereits eine Technik zur intensiven Aufbereitung von Halmfutter entwickelt worden, bei der das Halmgut zwischen eine zentrale Schneidkantenwalze und mehrere peripher angeordnete Planetenwalzen eingezogen und von diesen weiterbefördert wird. Die Aufbereitung des Halmgutes erfolgt hier durch die verschiedenen Umfangsgeschwindigkeiten der Schneidkanten- und der Planetenwalzen und deren besondere Oberflächengestaltung. Das aufbereitete Halmgut wird anschließend einer Presse zugeführt und dort zu einer Matte zusammengepreßt, die dann auf dem Feld zum Trocknen abgelegt wird.

Da es sich nicht verhindern läßt, daß mit dem auf dem Feld geschnittenen Halmgut gelegentlich auch Steine unterschiedlicher Größe aus dem Erdreich zwischen die Walzen gelangen, treten wiederholt Oberflächenbeschädigungen der Walzen ein. Gelangen größere Steine zwischen die Walzen, muß man mit einer Blockierung des Arbeitsablaufes rechnen. Eine solche Unterbrechung der Arbeit ist aber mit zeitraubenden Reparaturarbeiten verbunden. Außerdem ist das Auswechseln der oberflächenbeschädigten Walzen kostspielig.

Aus der DE-A 34 15 753 ist ein Verfahren und eine Vorrichtung zum Aufbereiten von Gras für Futterzwecke bekanntgeworden, bei dem das Gras nach dem Schneiden aufgenommen und mit einem in einem Gehäuse umlaufenden ersten Schlegelwerk einem zweiten diesem nachgeschalteten im gleichen Drehsinn in einem zweiten Gehäuse umlaufenden Schlegelwerk zugeführt und schließlich auf dem Feld abgelegt wird. Dabei sind die beiden Schlegelwerke lediglich als Fördereinrichtungen anzusehen, die das Mähgut mit unterschiedlicher Geschwindigkeit durch die beiden Gehäuse hindurchschleusen. Ein Aufreißen in Längsrichtung der einzelnen Pflanzen durch die Funktion der beiden Schlegelwerke kann hierbei nicht erreicht werden.

Der Erfindung liegt daher die Aufgabe zugrunde, ein Verfahren anzugeben, bei dem die genannten Nachteile der bekannten Verfahren nicht zu befürchten sind, das dazu geeignet ist, in einfacher und wirkungsvoller Weise Pflanzenkörper unterschiedlicher Art, wie Gras, Flachs, Sisal oder sonstige Palmfasern aufzubereiten, um den Anfangsfeuchtegehalt möglichst schnell auf dem Feld abtrocknen und das Pflanzengut innerhalb kurzer Zeit unter Dach bringen zu können. Ferner soll eine Vorrichtung geschaffen werden, die sich zur Durchführung des Verfahrens eignet und so einfach konstruiert ist, daß ihre Anschaffung auch von kleineren Unternehmen möglich ist.

Dies wird durch die Merkmale der Ansprüche 1 und 9 erreicht. Vorzugsweise Ausbildungen der Erfindung sind durch die Merkmale der Unteransprüche gekennzeichnet.

Durch das flächige Zusammenfassen der einzelnen Pflanzen ist es möglich, die Fördergeschwindigkeit der einzelnen Pflanzenkörper etwa zu vereinheitlichen, bevor sie dem Bereich zum Aufreißen der Pflanzen zugeführt werden. Innerhalb dieses Bereiches wird der Pflanzenteppich kontinuierlich aufgerissen und die in ihm enthaltenen einzelnen Halme in Längsrichtung aufgerissen. Dies ist insbesondere von Bedeutung, wenn mehrere Bereiche zum Aufschließen des Pflanzengutes hintereinander geschaltet zum Einsatz gebracht werden. Wird die Arbeitsgeschwindigkeit des jeweils nachfolgenden Bereiches vorzugsweise größer gewählt als die des vorangegangenen Bereiches, dann ergibt sich, daß die Arbeitsgeschwindigkeit am Ende des Arbeisprozesses am größten ist. Zur Beschleunigung des Trockenvorganges werden die aufgerissenen Halme entweder locker auf dem Feld abgelegt oder es wird aus den aufgerissenen Halmen eine verdichtete Matte gebilet, bevor diese auf dem Feld abgelegt wird.

Eine Vorrichtung zur Durchführung des vorstehend beschriebenen Arbeitsverfahrens umfaßt eine drehbare Fördereinrichtung zum Aufnehmen des von seinen Wurzelballen abgetrennten Pflanzengutes und eine Vorrichtung zum Aufreißen der Pflanzen. Sie ist durch die Merkmale des Kennzeichens des Anspruchs 9 Um eine optimale Aufbereitung des Pflanzengutes zu erreichen, muß man vermeiden, daß die Pflanzenkörper, während sie die Vorrichtung durchlaufen, zerschnitten werden. Vielmehr sollen die einzelnen Pflanzenkörper in ihrer Längsrichtung aufgerissen werden. In der erfindungsgemäßen Vorrichtung wird dieser Effekt dadurch erreicht, daß die zunächst flächig zusammengefaßten Pflanzenkörper mit langsamer Geschwindigkeit dem Schlag-Zug-Reiß-Preßwerkzeug zugeführt werden, dessen Arbeits- und Fördergeschwindigkeit erheblich höher gewählt wird. Hierdurch wird erreicht, daß die zusammengefaßten Pflanzenkörper kontinuierlich aufgerissen und einzelne Halme aufgeschlossen werden. Infolge der geringeren Zuführungsgeschwindigkeit der flächig zusammengefaßten Pflanzenkörper werden diese gegenüber der höheren Arbeitsgeschwindigkeit des Schlag-Zug-Reiß- und Preßwerkzeuges ständig etwas zurückgehalten. Der erzielbare Aufschlußgrad bestimmt sich entscheidend durch die Differenz der Geschwindigkeiten des Pflanzengutes im Förderkanal und der Umfangsgeschwindigkeit des Schlag-Zug-Reiß- und Preßwerkzeuges. Vorzugsweise kann man die Abmessungen des Förderkanals in Abhängigkeit von dem durch das Schlag-Zug-Reiß- und Preßwerkzeug ausgeübten Zug so wählen, daß im Kanal auf das Pflanzengut eine Rückhaltekraft ausgeübt wird, die ausreicht, um dem durch das Schlag-Zug-Reiß- und Preßwerkzeug auf das Pflanzengut ausgeübten Zug entgegenwirkend, dieses zurückzuhalten. Hierzu können die Kanalweite durch Veränderung der Lagereinstellung der Förderwalze und Leitwandung verändert werden. Der erzielbare Aufschlußgrad der Pflanzenkörper kann aber auch durch die Wahl der Länge der Schlagfläche beeinflußt werden. So kann vorzugsweise die Länge der Schlagfläche in Förderrichtung gesehen nach Maßgabe des Verhältnisses zwischen der Fördergeschwindigkeit des ihr zugeführten Pflanzengutes und der Umfangsgeschwindigkeit des Schlag-Reiß- Zug- und Preßwerkzeuges gewählt werden.

Das aufgeschlossene Pflanzengut kann nach dem Verlassen des oder der Bereiche zum Aufschließen der Pflanzenkörper entweder locker auf dem Feld abgelegt werden, gegebenenfalls bedient man sich aber einer Vorrichtung zum Ablegen des aufgeschlossenen Pflanzengutes. Diese umfaßt vorzugsweise mindestens zwei gegenläufige Walzen, die das aufgeschlossene Pflanzengut übernehmen, verdichten und in Form einer Matte ausstoßen, die entweder auf dem Feld abgelegt oder von einer weiteren Fördervorrichtung übernommen wird.

An Tagen, an denen die Sonneneinstrahlung für eine schnelle Trocknung auf dem Feld als nicht ausreichend angesehen wird, ist es von Vorteil, beim Verdichten der Pflanzenkörper zu einer Matte zumindest einen Teil des Pflanzensaftes abzupressen um den Trockenvorgang zu beschleunigen.

Um den Vorgang des Aufbereitens der Halme effektiver zu gestalten, kann man das der Vorrichtung zugeführte Pflanzengut möglichst einheitlich in Förder- oder Arbeitsrichtung ausrichten, bevor es von seinem Wurzelballen getrennt wird. Diese Forderung bedingt aber, daß die Tätigkeiten der Trennvorrichtung und der Vorrichtung zum Eingeben des Pflanzengutes funktionell aufeinander abgestimmt sind, wobei die Trenn- oder Schneidkante der trennvorrichtung nach Maßgabe der Länge der Pflanzenkörper der Eingabevorrichtung nachgeschaltet sein muß, da in diesem Fall erst die Ausrichtung der Halme erfolgt sein muß, bevor diese von ihren Wurzelballen abgetrennt werden. Man kann aber auch Mähsysteme wählen, die das geschnittene Gut in Längsrichtung ablegen.

Liegt das Pflanzengut bereits gemäht auf dem Feld, dann wird man vorzugsweise der ersten Zuführungsvorrichtung eine Eingabevorrichtung vorschalten, die in Form einer Fördereinrichtung (Förderband, Schieber, Pick-up-Vorrichtung) ausgebildet ist und das geschnittene Pflanzengut in die Zuführungsvorrichtung eingibt.

Gemäß einer weiteren vorzugsweisen Ausbildung der erfindungsgemäßen Vorrichtung zur Durchführung des Verfahrens zum Aufbereiten von faserhaltigen Pflanzenkörpern bedient man sich gegenläufiger Walzen, die zwei unabhängig voneinander umlaufende Förderbänder antreiben, deren Umlaufbahnen in einem Teilbereich einander gegenüberliegen und das zwischen beide Förderbänder eingeführte aufgeschlossene Pflanzengut weiterleiten. Dabei ist es sinnvoll, um einen zu hohen Zug der Förderbänder zu vermeiden, aber dennoch einen hohen Preßdruck auf das von dem Bereich zum Aufschließen der Pflanzenkörper ausgestoßene, aufgeschlossene Pflanzengut auszuüben und eine verdichtete Matte zu erzeugen, daß beide Förderbänder gemeinsam in ihrem sich gegenüberliegenden Bahnbereich über eine erste Förderwalze für den Umlauf des einen Förderbandes geführt sind und daß beidseitig der ersten Förderwalze für den Umlauf des zweiten Förderbandes dienende zweite Förderwalzen (Preßwalzen) angeordnet sind, die die beiden Förderbänder gegen die Oberfläche der ersten Förderwalze pressen. Der Anpreßdruck der Förderbänder kann dann innerhalb des sich gegenüberliegenden Bereiches der beiden Förderbänder verändert werden, was sich zum Beispiel durch Verwendung von Federvorrichtungen, die über Schwenkarme auf die Preßwalzen einwirken, bewerkstelligen läßt. Hierdurch wird dann erreicht, daß der Abstand zwischen den sich gegenüberliegenden Förderbändern verändert, vorzugsweise verringert wird und das aufgeschlossene Pflanzengut eine ausreichende Verdichtung erfährt.

Weitere vorzugsweise Merkmale der Erfindung ergeben sich aus den Ansprüchen sowie der Beschreibung von vier Vorrichtungen zum Aufbereiten von Pflanzengut anhand der Zeichnung. Hierin zeigen:
- Fig. 1: eine Vorrichtung zum Aufbereiten von Pflanzenkörpern mit Förderwalzen zur Herstellung einer Matte, die auf dem Feld abgelegt wird,
- Fig. 2: die Vorrichtung nach Fig. 1 in Kombination mit einer Trennvorrichtung und abgewandelten Förderwalzen zur Herstellung eine Matte aus aufgeschlossenen Pflanzenkörpern,
- Fig. 3: eine aufwendiger ausgestatte Vorrichtung zum Aufbereiten des Pflanzengutes
- Fig. 4: eine weitere Vorichtung zum Aufschließen des Pflanzengutes in Kombination mit einer weiteren Vorrichtung zur Bildung einer zur Trocknung auf dem Feld abzulegenden Matte des aufgeschlossenen Pflanzengutes und
- Fig. 5: verschiedene Ausbildungen von Hammerköpfen der Schlag-Reiß-Zug- oder Preßvorrichtung im Längsschnitt dargestellt.

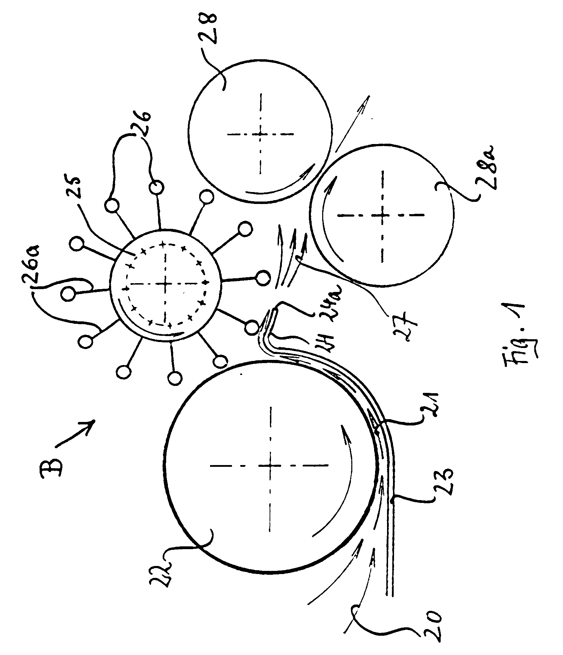

Die in Fig. 1 gezeigte Vorrichtung zur Aufbereitung von faserhaltigem Pflanzengut ist lediglich schematisch dargestellt. Es handelt sich um eine Vorrichtung, die von einem nicht dargestellten Gehäuse umschlossen, und gegebenenfalls von einem fahrbaren Untersatz getragen ist.

Durch Pfeile ist in der Zeichnung der Fluß der Pflanzenkörper durch die Vorrichtung gekennzeichnet, dabei sind aber für die Funktionsweise nicht bedeutsame Leitbleche und ablösende Bleche aus Gründen der Übersichtlichkeit nicht dargestellt.

Das auf dem Feld geschnittene, also von seinen Wurzelballen getrennte und auf dem Feld abgelegte Halmgut wird mit Hilfe eines Förderbandes, eines Schiebers oder einer sogenannten Pick-up-Vorrichtung (nicht dargestellt) bei 20 in die Öffnung eines Förderkanals 21 eingeführt. Der Förderkanal 21 ist gebildet aus einer drehbar gelagerten Förderwalze 22 und einem die Förderwalze 22 in ihrem unteren Umfangsbereich in einem wählbaren Abstand umgebenden Leitblech 23, das an seinem von der Kanalöffnung abliegenden Ende in eine sogenannte Schlagfläche 24 mit einer Kante 24a ausläuft, deren Funktion nachstehend näher beschrieben wird.

Die Achse der Förderwalze 22 kann elastisch gelagert sein, um den Abstand des Walzenumfanges von dem Leitblech 23 des Förderkanals 21 verändern zu können. Es kann aber auch das Leitblech 23 selbst justierbar sein, um die durch den Förderkanal 21 strömende Menge an Schnittgut, bzw. die Strömungsgeschwindigkeit durch den Förderkanal 21 oder auch die Kräfteverhältnisse im Förderkanal 21 steuern zu können. Die genannten Parameter sind von ausschlaggebender Bedeutung für den mit Hilfe des im Anschluß an den Förderkanal 21 angeordneten Schlag-Zug-Reiß- und Preßwerkzeugs 25 erzielbaren Aufschlußgrad der Pflanzenkörper. Das Werkzeug 25 ist im Beispiel als ein Schlagrad 25 ausgebildet, auf dessen Umfang verteilt zylindrische Hammerglieder 26 angeordnet sind. Die einzelnen Hammerglieder 26 sitzen entweder auf beweglich am Schlagrad 26 befestigten, starren Stielen 26a oder an starr am Schlagrad 25 befestigten, elastischen Stielen. Das Schlagrad 25 selbst kann ebenfalls elastisch gelagert sein, um die Wirkung der Hammerglieder 26 auf das über die Schlagfläche 24 gleitende Pflanzengut regeln zu können, da der Abstand zwischen dem Schlagrad 25 und der Schlagfläche 24 den mit der Vorrichtung erzielbaren Aufschlußgrad des Pflanzengutes mitbestimmt.

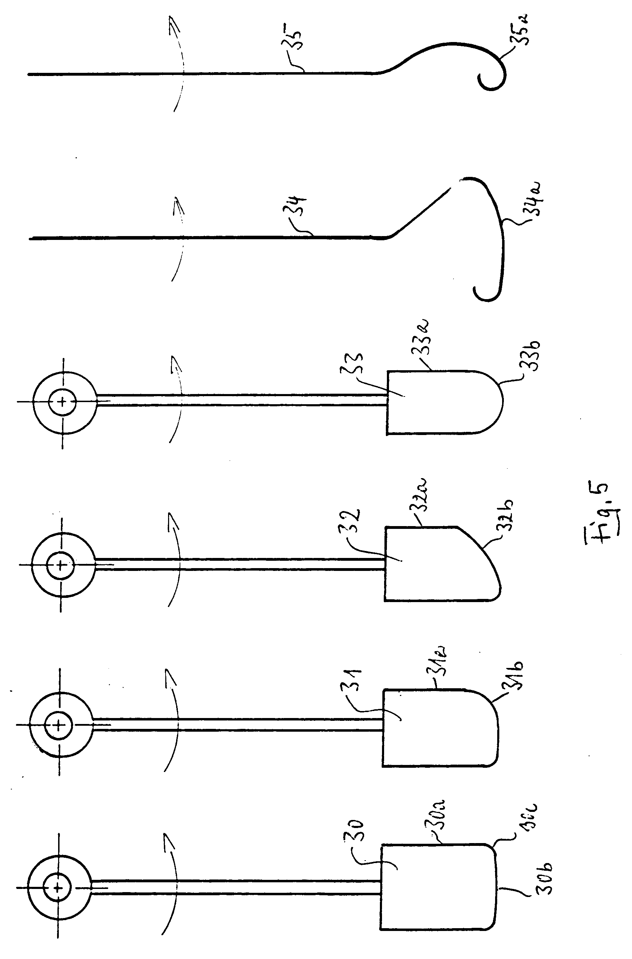

In Fig. 5 sind verschiedene Ausbildungen der Hammerköpfe im Längsschnitt gezeigt. Ein Hammerkopf 30 ist etwa quaderförmig ausgebildet. Seine im Zusammenwirken mit der Schlagfläche 24 und deren Kante 24a wesentlichen Flächen 30a und 30b sind an ihrer Stoßkante 30c abgerundet. Mit einem solchen Hammerkopf, dessen Stiel beweglich am Schlagrad 25 angebracht wird, erzielt man im wesentlichen eine Schlag- und Zugwirkung auf das Pflanzengut.

Bei einem Hammerkopf 31, der ebenfalls mit starrem Stiel beweglich am Schlagrad 25 befestigt wird, ist die Schlagfläche 31 a bei 31 b stark abgerundet. Bei einem solchen Hammerkopf erzielt man eine gleichmäßige Schlag-Zug-Reiß- und Preßwirkung, während bei einem Hammerkopf 32 mit stark verkürzter Schlagfläche 32a, die stumpfwinklig in die flachgekrümmte (großer Krümmungsradius) Fläche übergeht, die erzielte Preßwirkung im Vordergrund steht, aber die Schlag-und Zugwirkung nur gering ist. Bei einem Hammerkopf 33, dessen Schlagfläche 33a Teile eines Halbzylinders 33b ist, sind Schlag- Zug- und Preßwirkung in etwa ausgeglichen.

Die Schlagelemente 34 und 35 sind aus flachen, hakenförmig gebogenen, elastischen Blechen geformt. Ihre Stiele werden starr mit dem Schlagrad 25 verbunden. Mit einem flach ausgebildeten Haken 34a erzielt man vorwiegend eine starke Preßwirkung. Seine Schlag- und Zug-Wirkung sind von untergeordneter Bedeutung, doch ist die Zug-Wirkung auf jeden Fall so groß, daß das Pflanzengut weiterbefördert wird. Das als Haken 35 ausgebildete Schlagelement ist in seinem Endbereich mit kleinem Krümmungsradius 35a gebogen. Bei einem solchen Schlagelement sind Schlag-Preß- und Zugwirkung etwa gegeneinander ausgeglichen.

Selbstverständlich sind alle erzielbaren Kräfte zunächst abhängig vom Eigengewicht der Schlagelemente und deren durch das Schlagrad 25 vermittelten Umfangsgeschwindigkeit. Aber auch der Abstand der Schlagflächen der Schlagelemente zur Schlagkante sowie deren Oberflächenbeschaffenheit und natürlich die Zufuhrgeschwindigkeit des aufzuschließenden Pflanzengutes sind für die erzielbare Wirkung beim Aufschließen des Pflanzengutes von Bedeutung. Dies wird nachstehend noch näher erläutert.

Um ein Aufreißen der über die Schlagfläche 24 gleitenden Halme zu erzielen, wird die Umfangsgeschwindigkeit der Förderwalze 22 und damit die Strömungsgeschwindigkeit des Pflanzengutes im Förderkanal kleiner gewählt als die Umfangsgeschwindigkeit der Hammerglieder 26 des Schlagrades 25. Die einzelnen Hammerglieder 26 treffen auf die über die Schlagfläche 24 der Kante 24a zugeführten, im Förderkanal 21 verdichteten und zurückgehaltenen Halme und reißen sie auf. Abhängig von der Differenz der Geschwindigkeiten von zugeführtem Pflanzengut und der Hammerglieder 26 bzw. abhängig von dem Verhältnis zwischen dem und den Hammergliedern 26 auf das Pflanzengut ausgeübten Zug und der im Förderkanal 21 erzeugten Rückhaltekraft muß die Länge der Schlagfläche 24 gewählt werden. Zur Beeinflussung des mit der Vorrichtung erzielbaren Aufschlußgrades kann zum Beispiel durch Veränderung der Lagerung der Förderwalze 22 der Kanaldurchmesser verändert werden. Bei gleichbleibender Menge des zugeführten Pflanzengutes wird bei Verringerung des Kanaldurchmessers die auf das strömende Pflanzengut ausgeübte Rückhaltekraft erhöht. Die einzelnen Halme werden stärker verdichtet und strömen mit verringerter Geschwindigkeit über die Schlagfläche 24. Bei unveränderter Umdrehungsgeschwindigkeit des Schlagrades 25 wird somit bei gleichbleibendem , durch die Hammerglieder 26 auf das zugeführte Pflanzengut ausgeübtem Zug das Pflanzengut im Förderkanal 21 stärker zurückgehalten. Die Geschwindigkeitsdifferenz zwischen der Geschwindigkeit des Pflanzengutes und der Hammergeschwindigkeit steigt und damit verbessert sich der Aufschlußgrad der gesamten Vorrichtung.

Ganz allgemein ist zu sagen, daß die Schlag-Zug-Reiß-Preßvorrichtung die ihr über die Schlagfläche zugeführten flächig zusammengefaßten Halme in ihrer Längsrichtung aufreißt, daß aber die einzelnen Halme nicht durch die Schlagwirkung der Vorrichtung abgeschlagen, durchtrennt und verkürzt werden.

Das aufgeschlossene Pflanzengut folgt dann den Pfeilen 27, ohne wie bei den herkömmlichen Hammermühlen herumgewirbelt zu werden, und wird zwischen zwei gegenläufigen Walzen 28,28a hindurchgeführt und gegebenenfalls nachfolgend zu einer Matte verdichtet. Das aufgeschlossene Pflanzengut kann aber auch sofort in aufgeschlossenem Zustand locker auf dem Feld zur Trocknung abgelegt werden.

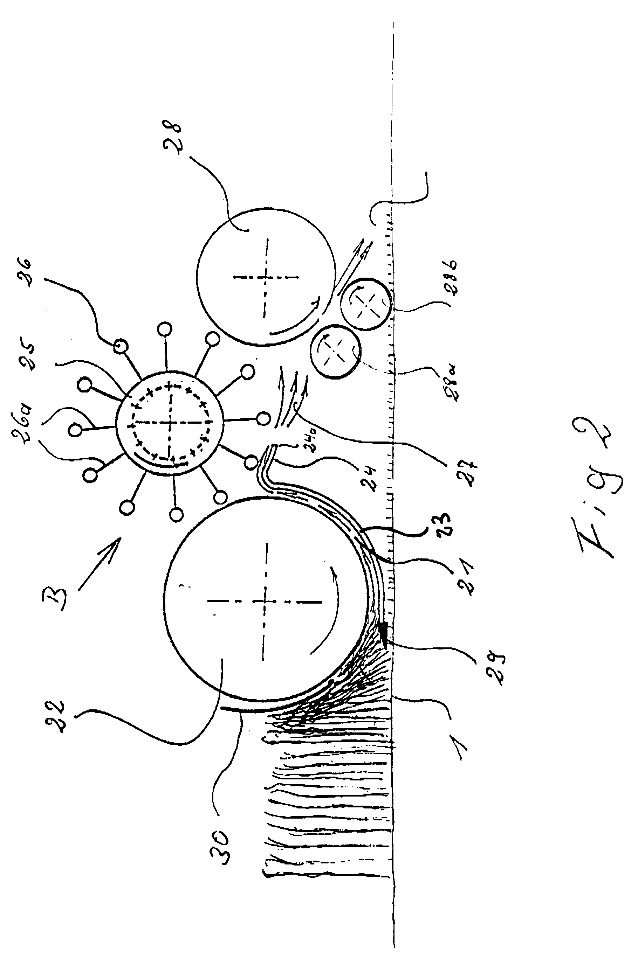

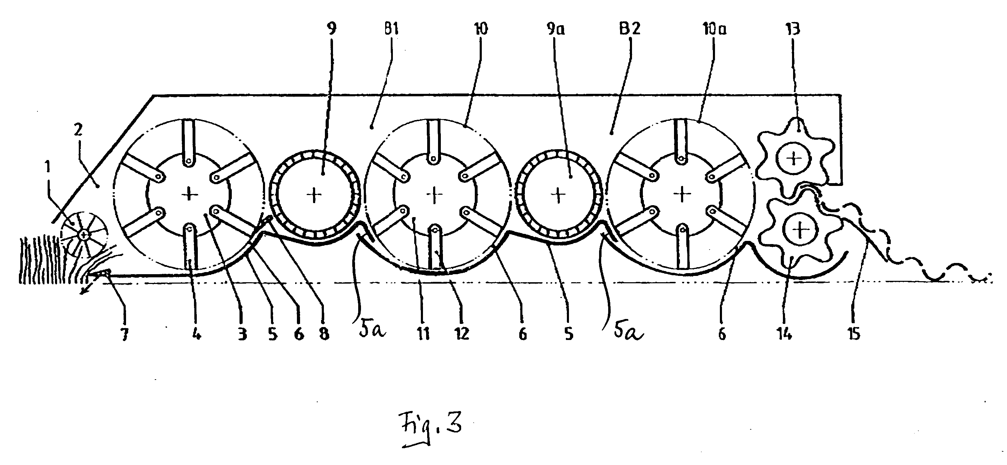

Die Oberfläche der Walzen 28, 28a kann, wie in der Zeichnung gezeigt, im Querschnitt kreisförmig sein. Es ist aber auch denkbar, daß die Oberfläche dieser Walzen wellenförmig ausgebildet ist (siehe hierzu Fig. 3) und die beiden Walzen miteinander kämmen, um sofort eine Matte besonders großer Oberfläche und starker Verdichtung zu schaffen, die dann, ohne eine weitere Vorrichtung durchlaufen zu müssen, auf dem Feld zum Trocknen abgelegt werden kann. Auch können, wie in Fig. 2 gezeigt ist, zwei Walzen 28 a und b von kleinerem Durchmesser der Walze 28 mit großem Durchmesser gegenüberliegen.

Um den Aufschlußgrad der Vorrichtung zu verbessern, ist es möglich, im Rahmen einer einzigen Vorrichtung das aufgeschlossene Pflanzengut, das an der Schlagkante 24a von dem Schlagrad 25 befreit, längs der Pfeile 27 fließt, erneut einem zwischen einer Förderwalze 22 und einem Leitblech 23 gebildeten Förderkanal 21 zuzuführen, im Kanal zu verdichten und nochmals über eine weitere Schlagfläche 24 dem Einfluß eines weiteren Schlagrades 25 auszusetzen.

Es ist aber auch möglich, wie in Fig. 2 gezeigt, daß die Vorrichtung zum Aufschließen des Pflanzengutes mit einer Trennvorrichtung 29 kombiniert ist. In diesem Fall wird das Pflanzengut unmittelbar unterhalb der Einzugswalze 22 von seinem Wurzelballen abgetrennt. Die Einzugswalze 22 ist dann vorzugsweise mit besonders rauher Oberfläche ausgebildet und frontal von einem Abweisblech 30, abgeschirmt. Dieses Abweisblech 30 hat die Aufgabe, das gesamte Pflanzengut der Trennvorrichtung 29 zuzuführen.

Eine besonders aufwendige, aber gleichzeitig auch wirkungsvollere Vorrichtung zum Aufschließen von Pflanzengut ist in der Fig. 3 gezeigt.

Es handelt sich hier um einer entweder fahrbare oder stationär auf dem Feld befindliche Vorrichtung zum Aufbereiten von faserhaltigen Pflanzenkörpern. Sie umfaßt gemäß der in Fig. 3 dargestellten, als Beispiel dienenden Ausbildung in ihrem Eingabebereich einen rotierbaren Rechen in Form einer Walzenbürste 1, die dazu dient, das aufrecht stehende Pflanzengut einheitlich in Förderrichtung der Vorrichtung auszurichten und der Eingabevorrichtung 2 zuzuführen. Die Eingabevorrichtung 2 besteht hier aus einer Walze 3 mit beweglich an ihrem Umfang angeordneten starren Gliedern, die das zugeführte Pflanzengut erfassen und in einen, zwischen einer Gehäusewandung 5 und dem Wirkungsbereich der Eingabevorrichtung 2 vorgesehenen Förderkanal 6 einführen. Eine Trennvorrichtung 7, hier ein im Bodenbereich der Vorrichtung 2 angeordnetes Messer, ist in Förderrichtung verschiebbar gelagert. Es ist abhängig von der Halmhöhe des zu schneidenden Pflanzengutes so einzustellen, daß die Halme erst dann von ihrem Wurzelballen getrennt werden, wenn sie bereits aufgrund der Tätigkeit der Walzenbürste 1 und der Walze 3 in Förderrichtung ausgerichtet sind.

Die dem Kanal 6 zugeführten Halme werden flächig zusammengefaßt und dem ersten Bereich zum Aufschließen des Pflanzengutes zugeführt. Die Zuführungsgeschwindigkeit des Pflanzengutes wird hier durch ein in den Kanal 6 hineinragendes Prallblech 8 gesteuert.

Ein erster Bereich B₁ zum Aufschließen des Pflanzengutes umfaßt eine Förderwalze 9, die die Zuführungsgeschwindigkeit der Pflanzenkörper zu einem Schlagwerkzeug 10 bestimmt. Die Pflanzenkörper werden dabei in einer Fortsetzung des Kanales 6 geführt, die ebenfalls durch die Gehäusewandung 5 und die Außenfläche der Förderwalze 9 definiert ist. Die Gehäusewandung läuft in eine Schlagfläche 5a aus, über die die Pflanzenkörper geführt und dem Schlagwerkzeug 10 ausgesetzt werden. Das Schlagwerkzeug 10 ist hier ein drehbar gelagerter Walzenkörper 11 mit radial nach außen ragenden, starr am Walzenkörper 11 befestigten, aber elastischen Gliedern 12.Die Umdrehungsgeschwindigkeit der Walze 11 ist so gewählt, daß ihre Umfangsgeschwindigkeit höher ist, als die Fördergeschwindigkeit der Förderwalze 9. Damit wird erreicht, daß auf die einzelnen Pflanzenkörper eine Rückhaltekraft ausgeübt wird und die in Förderrichtung ausgerichteten Halme in ihrer Längsrichtung aufgerissen werden, bevor sie durch die Walze 11 in den zwischen der Gehäusewandung 5 und der Walze 11 gebildeten Förderkanal über eine weitere Schlagfläche 5a dem zweiten Bereich B₂ zum weiteren Aufschließen des Pflanzengutes zugeführt werden, der entsprechend dem beschriebenen ersten Bereich B₁ ebenfalls eine Förderwalze 9a und einen Walzenkörper 10a enthält. Es ist aber darauf hinzuweisen, daß die Fördergeschwindigkeit der Förderwalze 9a etwa der Fördergeschwindigkeit des Walzenkörpers 10 entspricht, diejenige des Walzenkörpers 10a aber wiederum höher gewählt ist, so daß die zugeführten Pflanzenkörper noch stärker aufgerissen und die Halme aufbereitet werden.

Die zwischen der Gehäusewandung 5 und dem Walzenkörper 10 weiterbeförderten, aufgeschlossenen Pflanzenkörper werden zwei gegenläufigen Förderwalzen 13 und 14 zugeführt. Die Oberfläche dieser Förderwalzen 13 und 14 ist wellenförmig ausgebildet, wobei die Wellentäler parallel zur Walzenachse verlaufen. Die Förderwalzen 13 und 14 sind federnd gelagert und pressen die ihnen zugeführten aufgeschlossenen Pflanzenkörper zu einer Matte stark zusammen. Diese erhält hierbei eine wellenförmige Oberflächengestalt. Mit Hilfe eines Abstreifers 15, der der Oberflächengestalt der Förderwalzen 13 und 14 angeformt ist, wird die gepreßte und geformte Matte von der Walzenoberfläche abgestreift und zum Trocknen auf dem Feld abgelegt.

Es ist darauf hinzuweisen, daß auch bei dieser Vorrichtung alle Überlegungen hinsichtlich einer möglichen Variation der verschiedenen Parameter, wie Druck, Geschwindigkeitsdifferenz, Justierung der Walzen usw. gelten, wie sie im Zusammenhang mit der in den Fig. 1 und 2 gezeigten Ausbildung erwähnt wurden, um einen möglichst hohen und gleichmäßigen Aufschlußgrad zu erzielen.

Um den Trockenvorgang zu beschleunigen und zu verbessern, hat sich im Rahmen von umfangreichen Versuchen ergeben, daß aus einem Bereich B, B₁ oder Bₙ austretendes, aufgeschlossenes und zu einer Matte verdichtetes Pflanzengut dann zu einem besonders guten Trockenergebnis führt, wenn die in der Matte verdichteten Fasern möglichst weitgehend miteinander verfilzt und zusammengepreßt sind und außerdem die Pflanzenmatte eine möglichst glatte Oberfläche aufweist.

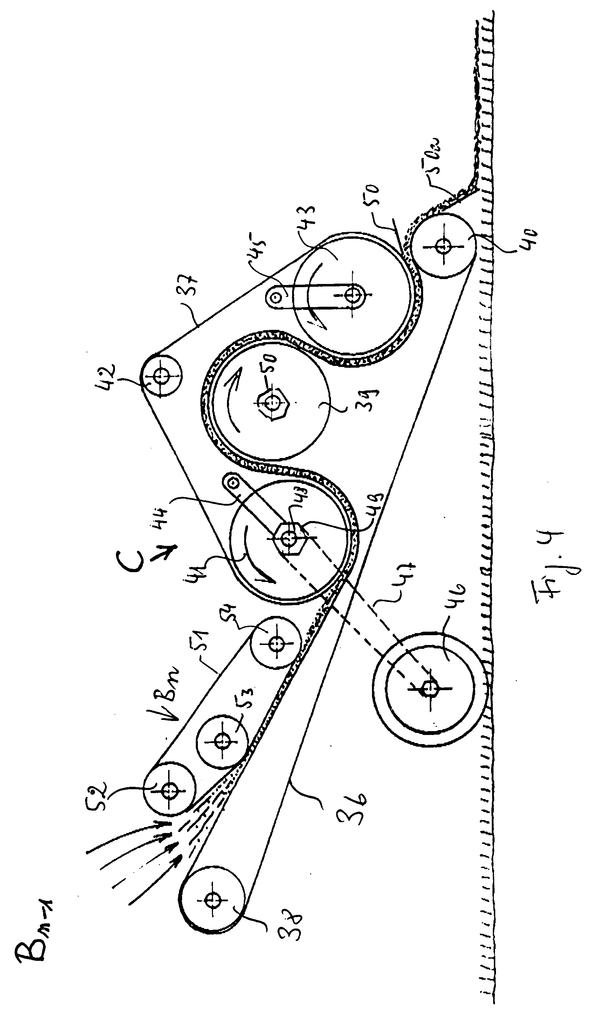

Um diese Voraussetzungen für eine verbesserte Trocknung zu erreichen, hat man die in Fig. 4 gezeigte Vorrichtung entwickelt, die es ermöglicht , das Verpressen der aufgeschlossenen Pflanzenkörper beliebig zu veriieren und außerdem die Oberfläche der Matten zu glätten, bevor diese auf dem Feld abgelegt wird.

Die einem der Bereiche B, B₁,B₂,B...ₙ zum Aufschließen des Pflanzengutes nachgeschaltete Vorrichtung C umfaßt zwei voneinander unabhängig umlaufende Förderbänder 36 und 37. Das Förderband 36 wird durch die Förderwalzen, 38,39 und 40 bewegt, das Förderband 37 durch die gegenläufig zu den Walzen 38,39 und 40 umlaufenden Förderwalzen 41,42, und 43.

Auf dem Förderband 36 wird das aus dem Bereich Bₙ - ₁ kommende aufgeschlossene Pflanzengut zur Förderwalze 41 transportiert und gelangt unter das Förderband 37, das in einem geringen Abstand vom Förderband 36 in gleicher Richtung wie dieses bewegt wird. Die Bahnen beider Förderbänder 36 und 37 verlaufen dann parallel zueinander und zwar zunächst unter der Förderwalze 41 hindurch zur Förderwalze 39, über diese hinweg zur Förderwalze 43. Die Anordnung der beiden Förderwalzen 41 und 43 ist dabei so getroffen, daß sie als Anpreßwalzen für die über den Umfang der Förderwalze 39 geführten Bahnabschnitte der beiden Förderbänder 36 und 37 dienen. Um die auf die beiden Förderbänder 36 und 37 und damit auch auf das zwischen beiden befindliche Pflanzengut wirkende Preßkraft regulieren zu können, sind die Anpreßwalzen 41 und 43 mit je einem Schwenkarm 44 und 45 verbunden, die ihrerseits über eine nicht gezeigteFedervorrichtung die Lage der Anpreßwalzen 41,43 relativ zur Förderwalze 39 bestimmen.Dabei wird vermieden, daß auf die Förderbänder 36,37 ein zu hoher Zug ausgeübt wird.

Der Antrieb der Förderwalzen 39 und 41 erfolgt durch eine Antriebswalze 46, die über einen Kupplungsriemen 47 mit der Welle 48 der Förderwalze 41 verbunden ist. Über ein Zahnradgetriebe 49,50 kann die Umdrehungsgeschwindigkeit der Förderwalze 41 41 mit entsprechender Übersetzung auf die Förderwalze 39 übertragen werden. Damit läßt sich erreichen, daß das Förderband 37 mit seiner glatten Oberfläche längs der Oberfläche des zwischen den Förderbändern 36 und 37 befindlichen Pflanzgutes entlang rutscht und die Oberfläche der sich durch den Anpreßdruck der Preßwalzen gebildeten, verdichteten Matte glättet. Die Walzen 38 und 40 bzw. 42 und 43 sind Leerlaufwalzen, denen keine besondere Funktion zukommt. Es soll nochmals darauf hingewiesen werden, daß, während die dem Pflanzengut zugewandte Oberfläche des Förderbandes 36 relativ rauh ausgebildet ist, die Außenfläche des Förderbandes 37 eine glatte Beschaffenheit aufweist. Bei dem Transport des Pflanzengutes durch die von den drei Walzen 41, 39 und 43 gebildete Preßvorrichtung erfahren die aufgeschlossenen Pflanzenfasern nicht nur einen bestimmbaren Preßdruck, sondern gleichzeitig wird durch die Oberflächenbeschaffenheit der sich gegenüberliegenden Förderbänder 36 und 37 während der Vorwärtsbewegung eine gewisse Scherkraft auf das zwischen den Förderbändern befindliche Pflanzengut ausgeübt. Letzteres führt in Verbindung mit dem Preßdruck zu einem starken Verfilzen der Pflanzenfasern, wobei z.B. infolge der glatten Oberfläche des Förderbandes 37 eine Matte mit relativ glatter Oberfläche ausgebildet wird, die mit Hilfe von der am Ausgang der Vorrichtung vorgesehenen Abstreifer 50 und 50a von den beiden Förderbändern 36 und 37 abgelöst und auf das Feld aufgelegt werden kann.

Aus Fig. 4 ist ferner noch eine weitere Möglichkeit zum Aufschließen des Pflanzengutes dargestellt. Diese Vorrichtung Bₙ umfaßt ein umlaufendes Förderband 51, das von den Förderwalzen 52,53,54 angetrieben wird. Im Ausführungsbeispiel ist die Vorrichtung Bₙ zum Aufschließen des Pflanzengutes der Vorrichtung C zum Herstellen der Matte aus den aufgeschlossenen Pflanzenfasern vorgeschaltet. Sie bedient sich auch eines Teilbereiches des Förderbandes 36. Dabei sind die Förderwalzen 53 und 54 so angeordnet, daß der zwischen ihnen verlaufende Bandabschnitt des Förderbandes 51 in einem geringen Abstand parallel zu dem Förderband 36 verläuft. Die Drehrichtung der Förderwalzen 52,53 und 54 ist gegenläufig zu derjenigen der Walzen 38,39 und 40. Die Bandgeschwindigkeit des Förderbandes 51 ist aber sehr viel höher als die Bahngeschwindigkeit des Förderbandes 36. Infolge einer rauhen Oberflächenbeschaffenheit des Förderbandes 51 und der großen Geschwindigkeitsdifferenz zwischen beiden Förderbändern 51 und 36 wird ein guter Aufschluß der Pflanzenfasern erreicht, der entweder allein für sich oder in Kombination mit den vorstehend in den Fig.1 - 3 beschriebenen Möglichkeiten zum Aufschließen der Pflanzenfasern eingesetzt werden kann.

Ganz allgemein soll erwähnt werden, daß alle Förderwalzen relativ zueinander beweglich gelagert sind, um beim Eindringen von Fremdkörpern, z. B. mit dem Pflanzengut mitgetragene Steine keine Schäden verursachen können. Bei einer Unterbrechung der Zufuhr des Pflanzengutes wird durch Lösen der Kupplung die Bewegung der Bänder unterbrochen.

An Tagen, an denen die Sonneneinstrahlung für eine schnelle Trocknung der aufgeschlossenen Pflanzenkörper auf dem Feld als nicht ausreichend angesehen wird, ist es von Vorteil, beim Verdichten der aufgeschlossenen Pflanzenkörper zu einer Matte zumindest einen Teil des Pflanzensaftes abzupressen um den Trockenvorgang zu beschleunigen. Dies wird dadurch erreicht, daß die Oberfläche des unter dem zu fördernden Pflanzengut liegenden Förderbandes 36 perforiert ist. Im Bereich C kann dann der Pflanzensaft ausgepreßt und gesammelt werden, was aber nicht im einzelnen dargestellt ist.

## Patentansprüche

1. Verfahren zum Aufbereiten von faserhaltigen Pflanzen (Gras, Flachs, Sisal und dergleichen), bei dem die Pflanzen auf dem Feld von ihren Wurzelballen abgetrennt, von einer Fördervorrichtung (9,22) aufgenommen, weitergeleitet, aufgeschlossen und anschließend auf dem Feld abgelegt werden, **dadurch gekennzeichnet**, daß
1. die Pflanzen beim Transport durch die Fördervorrichtung (9, 22) in an sich bekannter Weise zusammengefaßt werden,
2. die zusammengefaßten Pflanzen über eine der Fördervorrichtung (9,22) nachgeschaltete Schlagfläche (5a, 24) geführt werden,
3. die einzelnen Pflanzen auf der Schlagfläche (5a,24) durch Eingriff eines rotierenden Schlag-, Reiß-, Zug-, Presswerkzeuges (10, 25) und durch Zurückhalten der Pflanzen infolge ihrer Zusammenfassung in Längsrichtung aufgerissen werden und
4. die so aufgerissenen Pflanzen anschließend locker oder zu einer Matte vereinigt zum Trocknen auf dem Feld abgelegt werden.

2. Verfahren nach Anspruch 1, **dadurch gekennzeichnet**, daß die zusammengefaßten Pflanzen zum Aufreißen geschlagen und/oder gezogen und/oder gepreßt und/oder gerissen werden.

3. Verfahren nach Anspruch 1 oder 2, **dadurch gekennzeichnet**, daß die aufgerissenen Pflanzen vor ihrem Ablegen auf dem Feld zu einer Matte verdichtet werden.

4. Verfahren nach einem der Ansprüche 1 oder 3, **dadurch gekennzeichnet**, daß beim Verdichten der Pflanzen zu einer Matte Pflanzensaft abgepreßt wird.

5. Verfahren nach einem der vorhergehenden Ansprüche, **dadurch gekennzeichnet,** daß die Oberfläche der aus den aufgerissenen Pflanzen gebildeten Matte vor ihrem Ablegen auf dem Feld durch Vernetzen und/oder Verschmieren geglättet wird.

6. Verfahren nach einem der vorhergehenden Ansprüche, **dadurch gekennzeichnet**, daß die Oberfläche der für den Trockenvorgang vorbereiteten, aus aufgerissenen Pflanzen gebildeten Matte vor dem Ablegen auf dem Feld vergrößert wird.

7. Verfahren nach einem der vorhergehenden Ansprüche, **dadurch gekennzeichnet**, daß die von ihrem Wurzelballen abgetrennten Pflanzen vor ihrer Zusammenfassung in Arbeitsrichtung ausgerichtet werden.

8. Verfahren nach einem der vorhergehenden Ansprüche, **dadurch gekennzeichnet**, daß ein oder mehrere Bereiche zum Aufreißen der Pflanzen nacheinander durchlaufen werden, wobei vorzugsweise die Durchlaufgeschwindigkeit der Pflanzen jedes nachfolgenden Bereiches etwas größer gewählt wird.

9. Vorrichtung zur Durchführung des Verfahrens nach einem der Ansprüche 1 bis 7 mit einer drehbaren Fördereinrichtung (9,22) zum Aufnehmen des von seinen Wurzelballen abgetrennten Pflanzengutes und einer Vorrichtung (5,24,10,25) zum Aufschließen der Pflanzen, **dadurch gekennzeichnet**,
1. daß die Fördereinrichtung als drehbar gelagerte Förderwalze (9,22) und zum Zusammenfassen der Pflanzen ausgebildet ist, die in Verbindung mit einer sie, zumindest in ihrem unteren Umfangsbereich, in einem wählbaren Abstand umgebenden Leit- oder Gehäusewendung (5,23) einen Förderkanal (6,21) bildet durch den das eingegebene Pflanzengut dem Bereich (6,B₁,Bₙ) zum Aufreißen der Pflanzen zugeführt wird,
2. daß eine der Fördereinrichtung nachgeschaltete Schlagfläche so angeordnet ist, daß die Zusammengefaßten Pflanzen über die Schlagfläche führbar sind, wobei die Schlagfläche (5a,24) und ein mit der Förderwalze gleichsinnig, jedoch mit höherer Umfangsgeschwindigkeit umlaufendes, drehbar gelagertes, zylindrisches Schlag-,Zug-,Preß-,Reißwerkzeug (10,25) so ausgebildet sind, daß das über die Schlagfläche (5a, 24) zugeführte Pflanzengut von dem Schlag-,Zug-,Preß-,Reißwerkzeug erfaßbar ist, so daß infolge des Unterschieds zwischen der Fördergeschwindigkeit des Pflanzenguts und der Umfangsgeschwindigkeit des Schlag-,Zug-,Preß-,Reißwerkzeugs die einzelnen Pflanzen in ihrer Längsrichtung aufgerissen werden und
3. daß sich eine Vorrichtung (13,14,28,28a,28b,38,39,40,41, 42,43) zum Ablegen der so aufgerissenen Pflanzen anschließt.

10. Vorrichtung nach Anspruch 9, **dadurch gekennzeichnet**, daß der Abstand zwischen der Förderwalze (9,22) und der Leit- oder Gehäusewandung (5,23) nach Maßgabe des durch das Schlag-,Zug-,Reiß-,Preßwerkzeug (10,25) auf die Pflanzen ausgeübten Zugs wählbar ist, damit die auf das im Förderkanal (6,21) befindliche, sich verdichtende Pflanzen wirkende Rückhaltkraft ausreicht, um dem durch das Schlag-,Reiß-,Zug-,Preßwerkzeug (10,25) ausgeübten Zug so stark entgegen zu wirken, daß ein Aufreißen der Pflanzen erfolgt.

11. Vorrichtung nach Anspruch 9 oder 10, **dadurch gekennzeichnet**, daß die Förderwalze (9,22) und/oder die Leit- oder Gehäusewandung (5,23) federnd gelagert sind.

12. Vorrichtung nach einen der Ansprüche 9 bis 11, **dadurch gekennzeichnet**, daß sich die Leit- oder Gehäusewandung (5,23) in die dem Schlag-,Reiß-,Zug-,und Preßwerkzeug gegenüberliegende Schlagfläche (5a,24) fortsetzt und in einer Schlagkante (24a) endet.

13. Vorrichtung nach einen der Ansprüche 9 bis 12, **dadurch gekennzeichnet**, daß der Abstand zwischen dem Umfang des Schlag-,Reiß-,Zug-, und Preßwerkzeuges (10,25) und der Schlagfläche (5a,24) nach Maßgabe des erforderlichen Aufreißgrades der Pflanzen veränderbar ist.

14. Vorrichtung nach einem der Ansprüche 9 bis 13, **dadurch gekennzeichnet**, daß das Schlag-, Reiß-,Zug-, und Preßwerkzeug (10,25) durch eine Trägerwalze (11,25) gebildet ist, die, über ihren Umfang verteilt, sich radial nach außen erstreckende Schlagelemente (12,26) aufweist, die entweder als starre Glieder (26,26a, 30,31,32,33) ausgebildet und an der Trägerwalze (25) beweglich oder als elastische Glieder (34,35) ausgebildet und starr an der Trägerwalze (25) gelagert sind.

15. Vorrichtung nach einen der Ansprüche 9 bis 14, **dadurch gekennzeichnet**, daß bei starr an der Trägerwalze unbeweglich angeordneten Schlagelementen die Trägerwalze (11,25) elastisch gelagert ist.

16. Vorrichtung nach einem der Ansprüche 9 bis 15, **dadurch gekennzeichnet**, daß die Länge der Schlagfläche (5a,24) in Förderrichtung gesehen nach Maßgabe des Verhältnisses zwischen der Fördergeschwindigkeit des ihr zugeführten Pflanzengutes und der Umfangsgeschwindigkeit des Schlag-,Reiß-,Zug-, und Preßwerkzeug (10,25) wählbar ist.

17. Vorrichtung nach einem der Ansprüche 9 bis 16, **dadurch gekennzeichnet**, daß die Oberfläche der gegenläufigen Walzen (13,14,28,28a) ein wellenförmiges, Längs- oder Querwellen, oder ein gezahntes oder ein genopptes Profil aufweisen.

18. Vorrichtung nach einem der Ansprüche 9 bis 17, **dadurch gekennzeichnet**, daß mehrere Bereiche zum Aufreißen der Pflanzen vorgesehen sind, wobei jedem Bereich (B,B₁B₂ ........Bₙ) zum Aufreißen der Pflanzen eine Zuführungsvorrichtung vorgeschaltet ist.

19. Vorrichtung nach einem der Ansprüche 9 bis 18, **dadurch gekennzeichnet**, daß der ersten Zuführungsvorrichtung eine Eingabevorrichtung vorgeschaltet ist, die in Form einer Fördereinrichtung wie z.B. Förderband, Schieber, Pick-up-Vorrichtung ausgebildet ist und die geschnittene Pflanzen in die Zuführungsvorrichtung eingibt.

20. Vorrichtung nach einem der Ansprüche 9 bis 19, **dadurch gekennzeichnet**, daß der Eingabevorrichtung eine Vorrichtung zum Ausrichten der einzelnen Pflanzen in Arbeitsrichtung vorgeschaltet ist.

21. Vorrichtung nach einem der Ansprüche 9 bis 20, **dadurch gekennzeichnet**, daß die Vorrichtung zum Ausrichten der einzelnen Pflanzen mit einer Trennvorrichtung (7) zusammenwirkt, die die ausgerichteten Pflanzen von ihrem Wurzelballen abtrennt.

22. Vorrichtung nach einem der Ansprüche 9 bis 21, **dadurch gekennzeichnet**, daß die dem Bereich (B,B₁......Bₙ) zum Aufreißen der Pflanzen nachgeschaltete Fördervorrichtung aus mehreren gegenläufigen Walzen (28,28a,28b) gebildet ist.

23. Vorrichtung nach einem der Ansprüche 9 bis 22, **dadurch gekennzeichnet**, daß die im Förderkanal (6,21) zurückgehaltene Pflanzen jeweils um eine von der Differenzgeschwindigkeit zwischen der Förderwalze (9,22) und dem Schlag-,Reiß-,Zug-,Preßwerkzeug (10,25) abhängige Länge im Bereich der Schlagfläche (5a,21) aufgefasert wird, ohne daß die Längsfasern durchschnitten werden.

24. Vorrichtung nach einem der Ansprüche 9 bis 23, **dadurch gekennzeichnet**, daß die gegenläufigen Walzen (38,39,40 bzw. 41,42,43) zwei unabhängig voneinander umlaufende Förderbänder (36,37) antreiben, deren Umlaufbahnen in einem Teilbereich einander gegenüberliegen und das zwischen beide Förderbänder eingeführte, aufgerissenen Pflanzen weiterleiten.

25. Vorrichtung nach einem der vorhergehenden Ansprüche 9 bis 24, **dadurch gekennzeichnet**, daß sich die Bahngeschwindigkeit der beiden Förderbänder (36,37) voneinander unterscheidet.

26. Vorrichtung nach einem der vorhergehenden Ansprüche 9 bis 25, **dadurch gekennzeichnet**, daß die Außenfläche des unter den zu befördernden Pflanzen liegenden Förderbandes (36) aufgerauht oder perforiert und die Außenfläche des über den zu fördernden Pflanzen liegenden Förderbandes (37) glatt ist.

27. Vorrichtung nach einem der vorhergehenden Ansprüche 9 bis 26, **dadurch gekennzeichnet**, daß beide Förderbänder (36,37) gemeinsam in ihrem sich gegenüberliegenden Bahnbereich über eine erste Förderwalze (39) für den Umlauf des einen Förderbandes (36) geführt sind und daß beidseitig der ersten Förderwalze (39) für den Umlauf des zweiten Förderbandes (37) dienende zweite Förderwalzen b.z.w. Preßwalzen (41,43) angeordnet sind, die die beiden Förderbänder (36,37) gegen die Oberfläche der ersten Förderwalze (39) pressen.

28. Vorrichtung nach einem der vorhergehenden Ansprüche 9 bis 27, **dadurch gekennzeichnet**, daß die Preßwalzen (41,43) zur Änderung ihres Anpreßdruckes auf die Förderbänder (36,37) mit Schwenkarmen (44,45) versehen sind, deren Stellung über Federvorrichtungen justierbar ist.

29. Vorrichtung nach einem der vorhergehenden Ansprüche 9 bis 28, **dadurch gekennzeichnet**, daß der Antrieb der gegenläufigen Walzen (38,39,40 bzw. 41,42,43) über ein gemeinsames Antriebsrad (46) erfolgt und die Geschwindigkeitsdifferenz der beiden Förderbänder (36,37) durch ein zwischen zwei gegenläufige Walzen (41,39) geschaltetes Getriebe b.z.w. Zahnräder (49,50) regelbar ist.

30. Vorrichtung nach einem der Ansprüche 9 bis 29, **dadurch gekennzeichnet**, daß im Bereich der gegenläufigen Walzen (13,14,28,28a,40,43) oder Förderbänder (36,37) federnd angeordnete Abstreifer (15,50,50a) vorgesehen sind.

31. Vorrichtung nach einem der vorhergehenden Ansprüche 9 bis 30, **dadurch gekennzeichnet**, daß einer der Bereiche zum Aufreißen der Pflanzen (Bₙ) durch zwei unabhänig voneinander mit unterschiedlicher Bahngeschwindigkeit umlaufende Förderbänder (51,36) gebildet ist, deren Umlaufbahnen in einem Teilbereich in einem Abstand benachbart zu einander verlaufen, wobei die eine Außenfläche des einen Förderbandes (31) rauher als die des anderen Förderbandes (36) gewählt ist, so daß die Pflanzen des zwischen die Förderbänder eingeführten Pflanzengutes während des Umlaufes der Förderbänder aufgerissen werden.

32. Vorrichtung nach einem der vorhergehenden Ansprüche 9 bis 31, **dadurch gekennzeichnet**, daß die beweglich mit der Trägerwalze (25) verbundenen Schlagelemente (26) des Schlag-,Reiß-,Zug-,Preßwerkzeuges (25) in Form eines Hammers (30) ausgebildet sind mit etwa quaderförmigen, an der Schlagkante (30c) abgerundeten Hammerköpfen (30a,b,c).

33. Vorrichtung nach einem der vorhergehenden Ansprüche 9 bis 32, **dadurch gekennzeichnet**, daß die Aufschlagfläche (31b,32b,33b) des Hammerkopfes (31,32,33) durch eine gekrümmte Fläche gebildet ist, deren Krümmungsverlauf nach Maßgabe der gewünschten Schlag,-Zug-, oder Preßwirkung des Hammers wählbar ist.

34. Vorrichtung nach einem der vorhergehenden Ansprüche 9 bis 33, **dadurch gekennzeichnet**, daß die starr mit der Trägerwalze (25) verbundenen Schlagelemente aus flachen, hakenförmig gebogenen, elastischen Blechen (34a,35a) geformt sind.

## Claims

1. Method of handling fibre-containing plants (grass, flax, sisal and the like), wherein the plants in the field are separated from their root ball, picked up by a conveyor device (9, 22), transported, broken open and then deposited on the field,
characterized in that
1. the plants during transport through the conveyor device (9, 22) are combined in a known manner,
2. the combined plants are conveyed over a beating surface (5a, 24) disposed downstream of the conveyor device (9, 22),
3. the individual plants on the beating surface (5a, 24) are torn open in a longitudinal direction as a result of engagement of a rotating beating /tearing /drawing /pressing tool (10, 25) and retention of the plants following their combination and
4. the plants thus torn open are then deposited loosely or combined into a mat on the field for drying.

2. Method according to claim 1, characterized in that the combined plants for tearing open are beaten and/or drawn and/or pressed and/or torn.

3. Method according to claim 1 or 2, characterized in that the torn-open plants are compressed into a mat prior to being deposited on the field.

4. Method according to one of claims 1 to 3, characterized in that plant juice is extracted during compression of the plants into a mat.

5. Method according to one of the preceding claims, characterized in that the surface of the mat formed from the torn-open plants is smoothed by applying a lattice pattern and/or smearing prior to the mat being deposited on the field.

6. Method according to one of the preceding claims, characterized in that the surface of the mat formed from the torn-open plants and prepared for the drying process is enlarged prior to the mat being deposited on the field.

7. Method according to one of the preceding claims, characterized in that the plants separated from their root ball are aligned in operating direction prior to being combined.

8. Method according to one of the preceding claims, characterized in that one or more regions for tearing open the plants are passed through in succession, the plant through-flow speed of each subsequent region preferably being selected slightly higher.

9. Device for effecting the method according to one of claims 1 to 7, having a rotatable conveyor device (9, 22) for receiving the plant material separated from its root balls and a device (5, 24, 10, 25) for breaking open the plants, characterized in that
1. the conveyor device takes the form of a rotatably mounted conveyor roller (9, 22) designed so as to combine the plants, which roller together with a baffle or housing wall (5, 23), which surrounds the roller at least in its bottom peripheral region at a selectable distance, forms a conveyor channel (6, 21) through which the charged plant material is fed to the region (6, B₁, Bₙ) for tearing open of the plants,
2. that a beating surface disposed downstream of the conveyor device is disposed in such a way that the combined plants may be conveyed over the beating surface, the beating surface (5a, 24) and a rotatably mounted, cylindrical beating /drawing /pressing /tearing tool (10, 25) which rotates in the same direction as the conveyor roller but at a higher peripheral speed being so designed that the plant material fed over the beating surface (5a, 24) may be taken hold of by the beating / drawing/ pressing/ tearing tool so that, as a result of the difference between the conveying speed of the plant material and the peripheral speed of the beating /drawing /pressing /tearing tool, the individual plants are torn open in their longitudinal direction and
3. that a device (13, 14, 28, 28a, 28b, 38, 39, 40, 41, 42, 43) for depositing the plants thus torn open is adjoined.

10. Device according to claim 9, characterized in that the distance between the conveyor roller (9, 22) and the baffle or housing wall (5, 23) is selectable in accordance with the tension exerted by the beating /drawing /tearing /pressing tool (10, 25) upon the plants so that the retention force acting upon the plants situated and being compressed in the conveyor channel (6, 21) is sufficient to counteract the tension exerted by the beating /tearing /drawing /pressing tool (10, 25) to such an extent that a tearing open of the plants occurs.

11. Device according to claim 9 or 10, characterized in that the conveyor roller (9, 22) and/or the baffle or housing wall (5, 23) are spring mounted.

12. Device according to one of claims 9 to 11, characterized in that the baffle or housing wall (5, 23) continues into the beating surface (5a, 24) situated opposite the beating /tearing / drawing and pressing tool and terminates in a beating edge (24a).

13. Device according to one of claims 9 to 12, characterized in that the distance between the periphery of the beating /tearing / drawing and pressing tool (10, 25) and the beating surface (5a, 24) is variable in accordance with the required degree of tearing open of the plants.

14. Device according to one of claims 9 to 13, characterized in that the beating /tearing /drawing and pressing tool (10, 25) is formed by a carrier roller (11, 25) having, distributed over its periphery, radially outward extending beating elements (12, 26) which either take the form of rigid members (26, 26a, 30, 31, 32, 33) and are movably mounted on the carrier roller (25) or take the form of elastic members (34, 35) and are rigidly mounted on the carrier roller (25).

15. Device according to one of claims 9 to 14, characterized in that, in the case of beating elements disposed rigidly and immovably on the carrier roller, the carrier roller (11, 25) is elastically mounted.

16. Device according to one of claims 9 to 15, characterized in that the length of the beating surface (5a, 24) viewed in conveying direction is selectable in accordance with the ratio between the conveying speed of the plant material supplied to said surface and the peripheral speed of the beating /tearing /drawing and pressing tool (10, 25).

17. Device according to one of claims 9 to 16, characterized in that the surface of the contra-rotating rollers (13, 14, 28, 28a) has a longitudinally or transversely corrugated profile or a toothed profile or a nubbed profile.

18. Device according to one of claims 9 to 17, characterized in that a plurality of regions for tearing open the plants are provided, a respective feed device being provided upstream of each region (B, B₁ B₂ .....Bₙ) for tearing open the plants.

19. Device according to one of claims 9 to 18, characterized in that disposed upstream of the first feed device is a charging device which takes the form of a conveyor device, such as, for example, a conveyor belt, slide, pick-up device, and charges the cut plants into the feed device.

20. Device according to one of claims 9 to 19, characterized in that disposed upstream of the charging device is a device for aligning the individual plants in operating direction.

21. Device according to one of claims 9 to 20, characterized in that the device for aligning the individual plants cooperates with a separating device (7) which separates the aligned plants from their root balls.

22. Device according to one of claims 9 to 21, characterized in that the conveyor device disposed downstream of the region (B, B₁ .....Bₙ) for tearing open the plants is formed by a plurality of contra-rotating rollers (28, 28a, 28b).

23. Device according to one of claims 9 to 22, characterized in that in the region of the beating surface (5a, 21) the plants retained in the conveyor channel (6, 21) are separated into fibres in each case by a length dependent upon the differential speed between the conveyor roller (9, 22) and the beating /tearing /drawing /pressing tool (10, 25) without the longitudinal fibres being cut through.

24. Device according to one of claims 9 to 23, characterized in that the contra-rotating rollers (38, 39, 40 and 41, 42, 43 respectively) drive two conveyor belts (36, 37), which rotate independently of one another and whose rotation paths in a sub-region lie opposite one another and advance the torn-open plants introduced between the two conveyor belts.

25. Device according to one of the preceding claims 9 to 24, characterized in that the path speed of the two conveyor belts (36, 37) differs one from the other.

26. Device according to one of the preceding claims 9 to 25, characterized in that the outer surface of the conveyor belt (36) situated below the plants to be conveyed is roughened or perforated and the outer surface of the conveyor belt (37) situated above the plants to be conveyed is smooth.

27. Device according to one of the preceding claims 9 to 26, characterized in that the two conveyor belts (36, 37) are guided jointly in their opposing path region over a first conveyor roller (39) for rotation of the one conveyor belt (36) and that disposed on either side of the first conveyor roller (39) are second conveyor rollers and/or pressing rollers (41, 43), which are used for rotation of the second conveyor belt (37) and press the two conveyor belts (36, 37) against the surface of the first conveyor roller (39).

28. Device according to one of the preceding claims 9 to 27, characterized in that the pressing rollers (41, 43) for altering their contact pressure upon the conveyor belts (36, 37) are provided with swivel arms (44, 45), whose position is adjustable by means of spring devices.

29. Device according to one of the preceding claims 9 to 28, characterized in that the drive of the contra-rotating rollers (38, 39, 40 and 41, 42, 43 respectively) is effected by means of a common drive wheel (46) and the speed difference of the two conveyor belts (36, 37) may be regulated by means of a gearing and/or gear wheels (49, 50) installed between two contra-rotating rollers (41, 39).

30. Device according to one of claims 9 to 29, characterized in that resiliently disposed strippers (15, 50, 50a) are provided in the region of the contra-rotating rollers (13, 14, 28, 28a, 40, 43) or conveyor belts (36, 37).

31. Device according to one of the preceding claims 9 to 30, characterized in that one of the regions for tearing open the plants (Bₙ) is formed by two conveyor belts (51, 36), which rotate independently of one another at different path speeds and whose rotation paths in one sub-region extend at a distance adjacent to one another, the one outer surface of the one conveyor belt (31) being made rougher than that of the other conveyor belt (36) so that the plants of the plant material introduced between the conveyor belts are torn open during rotation of the conveyor belts.

32. Device according to one of the preceding claims 9 to 31, characterized in that the beating elements (26) of the beating /tearing /drawing /pressing tool (25) which are movably connected to the carrier roller (25) are designed in the form of a hammer (30), with substantially cuboid-shaped hammer heads (30a, b, c) which are rounded off at the beating edge (30c).

33. Device according to one of the preceding claims 9 to 32, characterized in that the striking surface (31b, 32b, 33b) of the hammer head (31, 32, 33) is formed by a curved surface, the shape of whose curvature is selectable in accordance with the desired beating, drawing or pressing action of the hammer.

34. Device according to one of the preceding claims 9 to 33, characterized in that the beating elements rigidly connected to the carrier roller (25) are formed from flat, resilient metal sheets (34a, 35b) bent in the shape of a hook.

## Revendications

1. Procédé pour préparer des végétaux fibreux (herbe, lin, fibres de sisal ou analogues), selon lequel on coupe les plantes de leurs racines en balles, dans le champ, on les recueille par un dispositif de transfert (9, 22), on les transfère, on les ouvre, puis on les dépose sur le champ, procédé caractérisé en ce que :
1. on réunit les plantes au transport à l'aide d'un dispositif de transfert (9, 22) d'une manière connue en soi,
2. les plantes réunies sont conduites sur une surface de battage (5a, 24) en aval du dispositif de transfert (9, 22),
3. les différentes plantes sont déchiquetées dans la direction longitudinale sur la surface de battage (5a, 24) par l'action d'un outil de battage, de déchiquetage, de traction et de compression, rotatif (10, 25), et en retenant les végétaux du fait de leur réunion.
4. Les plantes ainsi déchiquetées sont déposées librement ou sont réunies en une nappe pour sécher sur le champ.

2. Procédé selon la revendication 1, caractérisé en ce que les plantes réunies sont battues pour être déchiquetées et/ou sont tirées et/ou sont comprimées et/ou sont déchiquetées.

3. Procédé selon la revendication 1 ou 2, caractérisé en ce que les plantes déchiquetées sont comprimées en une nappe avant d'être déposées sur le champ.

4. Procédé selon l'une des revendications 1 ou 3, caractérisé en ce qu'on exprime le jus des plantes lorsqu'on les comprime pour former une nappe.

5. Procédé selon l'une des revendications précédentes, caractérisé en ce que la surface de la nappe formée par des plantes déchiquetées est lissée avant son dépôt sur le champ, par imbrication et/ou par étalement.

6. Procédé selon l'une des revendications précédentes, caractérisé en ce qu'on prépare pour la phase de séchage, la surface de la nappe formée de plantes déchiquetées pour l'agrandir avant le dépôt sur le champ.

7. Procédé selon l'une des revendications précédentes, caractérisé en ce que les plantes coupées de leurs racines en balles sont alignées dans la direction de travail avant d'être réunies.

8. Procédé selon l'une des revendications précédentes, caractérisé en ce qu'on parcourt une ou plusieurs plages successivement pour déchiqueter les plantes, et de préférence la vitesse de passage des plantes va en augmentant légèrement dans chaque zone successive.

9. Dispositif pour la mise en oeuvre du procédé selon l'une des revendications 1 à 7 à l'aide d'une installation de transfert rotative (9, 22) recevant les végétaux coupés de leurs racines en balles, et d'un dispositif (5, 24, 10, 25) pour ouvrir les végétaux, dispositif caractérisé en ce que :
1. l'installation de transfert est un cylindre de transfert (9, 2) rotatif conçu pour réunir les plantes et qui forme un canal de transfert (6, 21) en combinaison avec une tôle ou paroi de boîtier (5, 29) qui entoure au moins la partie périphérique inférieure du cylindre à une distance choisie, canal par lequel sont conduits les végétaux dans la zone (6, B₁, Bₙ) pour déchiqueter les plantes.
2. une surface de battage est prévue en aval de l'installation de transfert pour conduire les plantes réunies pardessus de la surface de battage et cette surface (5a, 24) ainsi qu'un outil de battage, de traction, de compression et de déchiquetage (10, 25) tournant dans le même sens que le cylindre de transfert mais avec une vitesse périphérique plus élevée, outil cylindrique monté en rotation, sont conçus pour que les végétaux fournis par-dessus la surface de battage (5a, 24) soient pris par l'outil de battage, de traction, de compression et de déchiquetage de façon que la différence entre la vitesse de transfert des végétaux et la vitesse périphérique de l'outil ouvre les plantes dans leur direction longitudinale et,
3. un dispositif (13, 14, 28, 28a, 28b, 38, 39, 40, 41, 42, 43) fait suite pour déposer les plantes ainsi déchiquetées.

10. Dispositif selon la revendication 9, caractérisé en ce que la distance entre le cylindre de transfert (9, 22) et la surface de guidage ou surface de boîtier (5, 23) se choisit suivant la traction que doit exercer l'outil de battage, de traction, de déchiquetage et de compression (10, 25) sur les végétaux, pour que la force de rappel agissant sur les végétaux à comprimer dans le canal de transfert (6, 21) soit suffisante pour s'opposer suffisamment fortement à la traction exercée par l'outil de battage, de traction, de déchiquetage et de compression (10, 25) pour produire le déchiquetage des plantes.

11. Dispositif selon la revendication 9 ou 10, caractérisé en ce que le cylindre de transfert (9, 22) et/ou la paroi de guidage ou de boîtier (5, 23) sont montés suspendus.

12. Dispositif selon l'une des revendications 9 à 11, caractérisé en ce que la surface de battage (5a, 24) qui poursuit la surface de guidage ou de boîtier (5, 23) en regard de l'outil de battage, de traction, de déchiquetage et de compression, se termine par une arête de battage (24a).

13. Dispositif selon l'une des revendications 9 à 12, caractérisé en ce que la distance entre la périphérie de l'outil de battage, de traction, de déchiquetage et de compression (10, 25), et la surface de battage (5a, 24), est variable suivant le degré de déchiquetage nécessaire des plantes.

14. Dispositif selon l'une des revendications 3 à 13, caractérisé en ce que l'outil de battage, de traction, de déchiquetage et de compression (10, 25) est formé par un cylindre de support (11, 25) comportant, répartis à sa périphérie, les éléments de battage (12, 26) s'étendant radialement vers l'extérieur et qui sont soit des éléments rigides (26, 26a, 30, 31, 32, 33), soit des éléments mobiles ou élastiques (34, 35) réalisés sur le cylindre de support (25), et qui sont montés rigidement sur le cylindre de support (25).

15. Dispositif selon l'une des revendications 9 à 14, caractérisé en ce que pour des éléments de battage montés fixes de manière rigide sur le cylindre de support, le cylindre (11, 25) est monté de manière élastique.

16. Dispositif selon l'une des revendications 9 à 15, caractérisé en ce que la longueur de la surface de battage (5a, 24) dans la direction de transfert est définie suivant le rapport entre la vitesse de transfert des végétaux qui arrivent et la vitesse périphérique de l'outil de battage, de déchiquetage, de traction et de compression (10, 25).

17. Dispositif selon l'une des revendications 9 à 16, caractérisé en ce que la surface des cylindres tournant en sens opposé (13, 14, 28, 28a) présente une section ondulée avec des ondulations longitudinales ou transversales, ou un profil denté ou à bossages.

18. Dispositif selon l'une des revendications 9 à 17, caractérisé par plusieurs zones pour déchiqueter les plantes, et à chaque zone (B, B₁, B₂ ... Bₙ) pour déchiqueter les plantes est associé en amont un dispositif d'alimentation.

19. Dispositif selon l'une des revendications 9 à 18, caractérisé en ce que le premier dispositif d'alimentation est précédé d'un dispositif d'entrée se présentant sous la forme d'une installation de transfert comme par exemple une bande transporteuse, un poussoir, un dispositif pick-up, et les plantes coupées sont ainsi introduites dans le dispositif d'alimentation.

20. Dispositif selon l'une des revendications 9 à 19, caractérisé en ce que le dispositif d'entrée est précédé d'un dispositif pour aligner les différentes plantes dans la direction de travail.

21. Dispositif selon l'une des revendications 9 à 20, caractérisé en ce que le dispositif pour aligner les différentes plantes coopère avec un dispositif-séparateur (7) qui coupe les plantes alignées par rapport à leurs racines en balles.

22. Dispositif selon l'une des revendications 9 à 21, caractérisé en ce que le dispositif de transfert en amont de la zone (B, B₁, ... Bₙ) pour déchiqueter les plantes, est formé de plusieurs cylindres (28, 28a, 28b) tournant en sens opposés.

23. Dispositif selon l'une des revendications 9 à 22, caractérisé en ce que les plantes retenues dans le canal de transfert (6, 21) sont ouvertes au niveau de la surface de battage (5a, 21) dont la longueur dépend de la différence de vitesses entre le cylindre-transporteur (9, 22) et l'outil de battage, de déchiquetage, de traction et de compression (10, 25), sans couper les fibres longitudinales.

24. Dispositif selon l'une des revendications 9 à 23, caractérisé en ce que les cylindres (38, 39, 40 ou 41, 42, 43) tournent en sens opposés entre deux bandes transporteuses (36, 37) tournant indépendamment l'une de l'autre et dont les trajectoires, dans la zone partielle, sont en regard l'une de l'autre et déchiquettent les végétaux introduits entre les bandes transporteuses.

25. Dispositif selon l'une des revendications précédentes 9 à 24, caractérisé en ce que les vitesses des deux bandes transporteuses (36, 37) sont différentes l'une de l'autre.

26. Dispositif selon l'une des revendications précédentes 9 à 25, caractérisé en ce que la surface extérieure de la bande transporteuse (36) située sous les végétaux à transporter, est rugueuse ou perforée, et la surface extérieure de la bande transporteuse (37) qui se trouve au-dessus des végétaux à transporter est lisse.

27. Dispositif selon l'une des revendications précédentes 9 à 26, caractérisé en ce que les deux bandes transporteuses (36, 37) sont guidées en commun dans leur plage en regard, par-dessus un premier cylindre transporteur (39) pour la circulation de l'une des bandes transporteuses (36), et en ce que de part et d'autre du premier cylindre transporteur (39) pour la circulation de la seconde bande transporteuse (37), il y a des seconds cylindres transporteurs ou cylindres de compression (41, 43) qui pressent les deux bandes transporteuses (36, 37) contre la surface de la première bande transporteuse (39).

28. Dispositif selon l'une des revendications précédentes 9 à 27, caractérisé en ce que les cylindres de compression (41, 43) sont munis de bras pivotants (44, 45) pour modifier leur pression d'application sur les bandes transporteuses (36, 37), bras dont la position se règle par des dispositifs à ressort.

29. Dispositif selon l'une des revendications précédentes 9 à 28, caractérisé en ce que l'entraînement des cylindres tournant en sens opposés (38, 39, 40 ou 41, 42, 43) se fait par une roue d'entraînement commune (46), et la différence de vitesse des deux bandes transporteuses (36, 37) se règle par une transmission par exemple à roue dentée (49, 50) montée entre deux cylindres tournant en sens opposé (41, 39).

30. Dispositif selon l'une des revendications 9 à 29, caractérisé en ce qu'au niveau des cylindres tournant en sens opposés (13, 14, 28, 28a, 40, 43) ou des bandes transporteuses (36, 37), il y a des racloirs (15, 50, 50a) montés à ressort.

31. Dispositif selon l'une des revendications précédentes 9 à 30, caractérisé en ce que l'une des plages pour déchiqueter les plantes (Bₙ) est formée par deux bandes transporteuses (51, 36) tournant à des vitesses de circulation de bande indépendantes et différentes, et dont les trajectoires dans une partie de la zone sont voisines l'une de l'autre, l'une des surfaces extérieures de l'une des bandes transporteuses (31) étant plus rugueuse que celle de l'autre bande transporteuse (36) pour que les tiges des végétaux introduits entre les bandes transporteuses sont déchiquetées pendant la circulation des bandes transporteuses.

32. Dispositif selon l'une des revendications précédentes 9 à 31, caractérisé en ce que les éléments de battage (26) de l'outil de battage, de déchiquetage et de compression (25), reliés de manière mobile au cylindre de support (25), sont réalisés sous la forme de marteaux (30) avec une tête de marteau (30a, 30b, 30c) sensiblement rectangulaire, arrondie au niveau de l'arête de frappe (30c).

33. Dispositif selon l'une des revendications précédentes 9 à 32, caractérisé en ce que la surface de battage (31b, 32b, 33b) de la tête de marteau (31, 32, 33) est formée par une surface courbe dont le tracé courbe est choisi en fonction de l'effet de battage, de traction ou de compression souhaité pour le marteau.

34. Dispositif selon l'une des revendications précédentes 9 à 33, caractérisé en ce que les éléments de battage reliés rigidement au tambour de support (25) sont des pièces de forme plate, de forme courbée en crochet, et en tôle élastique (34a, 35a).
